# EUROPÄISCHE PATENTSCHRIFT

(11) **EP 1 528 969 B1**
(45) Veröffentlichungstag und Bekanntmachung des Hinweises auf die Patenterteilung: **29.09.2010**
(21) Anmeldenummer: 03747930.0
(22) Anmeldetag: 26.08.2003
(51) Int. Cl.: B23P 11/02, B23B 31/02

(54) **SCHRUMPFVORRICHTUNG**
SHRINKING DEVICE
DISPOSITIF DE SERRAGE

(30) Priorität: 13.11.2002 DE 10253106
(43) Veröffentlichungstag der Anmeldung: 11.05.2005
(73) Patentinhaber: E. Zoller Gmbh & Co. KG Einstell-und Messgeräte, 71691 Freiberg/Neckar (DE)
(72) Erfinder: PFAU, Christian, 74321 Bietigheim-Bissingen (DE)
(74) Vertreter: Daub, Thomas
(86) Internationale Anmeldenummer: PCT/EP2003/009419
(87) Internationale Veröffentlichungsnummer: WO 2004/043643

(56) Entgegenhaltungen:
- DE-A- 10 024 423
- DE-U- 20 119 639
- US-A- 5 356 245
- PATENT ABSTRACTS OF JAPAN vol. 013, no. 327 (M-854), 24. Juli 1989 (1989-07-24) & JP 01 109029 A (HITACHI LTD), 26. April 1989 (1989-04-26)

## Beschreibung

### Stand der Technik

Die Erfindung betrifft eine Schrumpfvorrichtung und ein Verfahren zum Einschrumpfen eines Werkzeugs in eine Werkzeugaufnahme eines Werkzeugfutters.

Beim Einschrumpfen eines Werkzeugs wird das Werkzeug thermisch in eine Werkzeugaufnahme eines Werkzeugfutters eingespannt, wodurch eine sehr feste und hochpräzise Befestigung des Werkzeugs, z.B. eines Bohrers, Fräsers oder dergleichen, in der Werkzeugaufnahme erreichbar ist. Hierbei wird die Werkzeugaufnahme, die beispielsweise eine Bohrung zur Aufnahme eines Werkzeugschafts aufweist, erwärmt, so dass sich die Werkzeugaufnahme ausdehnt. Das Werkzeug wird mit seinem Schaft in die hierdurch vergrößerte Bohrung eingeführt. Bei einem anschließenden Abkühlen wird der Werkzeugschaft in der aufgrund der Abkühlung geschrumpften Werkzeugaufnahme kraftschlüssig gehalten. Die Durchmesser der Bohrung der Werkzeugaufnahme und des Schafts des Werkzeugs sind dabei so gewählt, dass beim Abkühlen eine kraftschlüssige und verdrehfeste Verbindung entsteht. Solcherart eingeschrumpfte Werkzeuge werden bei der Metallbearbeitung und mit Drehzahlen über 10.000 Umdrehungen pro Minute eingesetzt.

Aus der DE 100 24 423 A1 ist eine Schrumpfvorrichtung zum Einschrumpfen eines Werkzeugs in eine Werkzeugaufnahme bekannt, die als Heizeinrichtung zum Aufheizen der Werkzeugaufnahme eine Induktionsspule aufweist.

Der Erfindung liegt insbesondere die Aufgabe zugrunde, eine gegenüber bekannten Schrumpfvorrichtungen verbesserte Schrumpfvorrichtung anzugeben. Diese Aufgabe wird durch die Merkmale der Ansprüche 1 und 14 gelöst. Weitere Ausgestaltungen ergeben sich aus den Unteransprüchen.

### Vorteile der Erfindung

Die Erfindung geht aus von einer Schrumpfvorrichtung zum Einschrumpfen eines Werkzeugs in eine Werkzeugaufnahme eines Werkzeugfutters mit einer Heizeinrichtung zum Aufheizen der Werkzeugaufnahme. Es wird vorgeschlagen, dass die Schrumpfvorrichtung eine Gasabsaugvorrichtung zum Absaugen von aus der Werkzeugaufnahme entweichenden Gasen umfasst.

In ein Werkzeugfutter werden im Lauf der Zeit eine Vielzahl von Werkzeugen eingeschrumpft. Diese Werkzeuge werden zusammen mit dem Werkzeugfutter bei einem Bearbeitungsvorgang an einem Werkstück eingesetzt. Hierbei werden die Werkzeuge in der Regel mit einer Kühl- oder Schneidflüssigkeit, üblicherweise mit einem speziellen Öl oder mit einer Emulsion, benetzt. Die Flüssigkeit fließt außen am Werkzeug entlang oder durch Kühlkanäle im Innern des Werkzeugs. In der Regel kommt diese Flüssigkeit auch mit dem Werkzeugfutter in Berührung, das außerdem ebenfalls mit Kühlkanälen versehen sein kann. Nach einem Einsatz wird das Werkzeug aus der Werkzeugaufnahme ausgeschrumpft, indem die Werkzeugaufnahme erneut erwärmt wird, wobei sich die Bohrung der Werkzeugaufnahme vergrößert und das Werkzeug mit seinem Schaft aus der Werkzeugaufnahme herausgezogen werden kann. Rückstände von einer im oder am Werkzeug bzw. im oder an der Werkzeugaufnahme befindlichen Flüssigkeit werden hierbei mit erwärmt. Die Ein- bzw. Ausschrumpftemperatur liegt üblicherweise bei ca. 250 °C und somit oberhalb der Siedetemperatur der normalerweise verwendeten Kühl- oder Schneidflüssigkeiten. Die Rückstände der Flüssigkeit verdampfen zumindest teilweise und verbreiten sich in der Umgebung der Schrumpfvorrichtung. Die aus der Werkzeugaufnahme oder von der Oberfläche des Werkzeugs aufsteigenden Verdampfungsgase sind vom Geruch her nicht immer angenehm und können sogar gesundheitsgefährdend sein.

Mit einer an der Werkzeugaufnahme angeordneten Gasabsaugvorrichtung zum Absaugen von aus der Werkzeugaufnahme entweichenden Gasen können diese Gase von der Werkzeugaufnahme weg-und einem Filter zugeführt werden. Die Gase werden zumindest überwiegend aus der Umgebungsluft entfernt und können einer Reinigung zugeführt werden. Die Gasabsaugvorrichtung ist zweckmäßigerweise an der Heizeinrichtung oder dem Werkzeugfutter angeordnet und/oder mit ihnen verbindbar. Es genügt hierbei, wenn ein Teil der Gasabsaugvorrichtung am Werkzeugfutter oder an der Heizeinrichtung angeordnet und/oder mit ihnen verbindbar ist.

Die Gasabsaugvorrichtung weist ein Gebläse zur Erzeugung eines Drucks bzw. eines Unterdrucks und zweckmäßigerweise eine Gasreinigungs- oder Filtereinrichtung auf. Es ist auch möglich, die Verdampfungsgase ungereinigt einem Behälter oder einem entfernt gelegenen Umgebungsbereich zuzuführen. Die Gasabsaugvorrichtung kann zumindest insoweit zur Schrumpfvorrichtung zugehörig betrachtet werden, als dass eine Gaseinlassöffnung der Gasabsaugvorrichtung unmittelbar der Schrumpfvorrichtung zugeordnet werden kann. Diese Gaseinlassöffnung kann in unmittelbarer Nähe einer Aufnahmeöffnung der Werkzeugaufnahme positioniert sein, so dass die vom Werkzeug oder aus der Werkzeugaufnahme aufsteigenden und mit Flüssigkeitsdampf beaufschlagten Gase zumindest überwiegend in die Gaseinlassöffnung eingesogen werden. Einem Entweichen der Gase in die Umgebung wird wirksam entgegengewirkt.

Zweckmäßigerweise umfasst die Schrumpfvorrichtung eine Gasleiteinheit zur Leitung von Gas von einer Aufnahmeöffnung der Werkzeugaufnahme zu einer Gaseinlassöffnung der Gasabsaugvorrichtung. Mit einer Gasleiteinheit können an verschiedenen Orten entstehende Dämpfe der Gaseinlassöffnung zugeleitet werden, so dass mit beispielsweise nur einer Gaseinlassöffnung von unterschiedlich zueinander ausgerichteten oder größeren Flächen aufsteigende Dämpfe abgesaugt werden können. Die Gasleiteinheit kann ein Trichter sein, der in die Gaseinlassöffnung mündet, oder sie kann ein andersartig ausgestaltetes, ein Gasvolumen zumindest teilweise umgreifendes Gebilde sein, durch das das umgriffene Gasvolumen im Betrieb der Gasabsaugvorrichtung zur Gaseinlassöffnung hingelenkt wird. Die Gasleiteinheit kann hierbei das Werkzeug und/oder die Werkzeugaufnahme zumindest teilweise umgreifen. Es ist auch möglich, dass die Gasleiteinheit das Werkzeug im Wesentlichen vollständig und die Werkzeugaufnahme zumindest teilweise umschließt.

Vorteilhafterweise umfasst die Schrumpfvorrichtung eine Gasleiteinheit, die einen Unterdruckbereich umgreift, wobei die Gasleiteinheit zur Aufrechterhaltung eines Unterdrucks im Unterdruckbereich relativ zu einem Außenbereich der Gasleiteinheit und eines Druckgefälles von einer Aufnahmeöffnung der Werkzeugaufnahme zum Unterdruckbereich vorgesehen ist. Die Gasleiteinheit ist so ausgestaltet, dass durch das Absaugen von Gas aus der Gasleiteinheit ein Unterdruck innerhalb der Gasleiteinheit entsteht, der durch die Form der Gasleiteinheit bei stetiger Gasabsaugung im gesamten Bereich aufrechterhalten bleibt. Durch den gegebenenfalls nur leichten Unterdruck im Innern der Gasleiteinheit wird das mit Rückstandsdämpfen vermischte Gas im Inneren der Gasleiteinheit daran gehindert, in signifikanten Mengen aus der Gasleiteinheit heraus in die durch höheren Druck gekennzeichnete Umgebung auszutreten. Ein sicherer Schutz vor austretenden Gasen kann erreicht werden. Die Gasleiteinheit umgreift den Unterdruckbereich in der Weise, dass der Unterdruck erhalten bleibt. Sie kann den Unterdruck von der Umgebung hierbei vollständig oder nur teilweise abschließen. Sie schirmt vorteilhafterweise einen Bereich um die Öffnung der Werkzeugaufnahme herum zur Aufrechterhaltung eines Unterdrucks nach außen ab. Die Gasleiteinheit umschließt beispielsweise nur das Werkzeug und/oder die Werkzeugaufnahme jeweils zumindest teilweise. Es ist auch möglich, dass die Gasleiteinheit die gesamte Schrumpfvorrichtung oder, sollte die Schrumpfvorrichtung ein Teil einer Apparatur sein, die gesamte Apparatur umschließt. Die Gasleiteinheit kann eine oder mehrere Öffnungen aufweisen, durch die das Werkzeug und gegebenenfalls die Werkzeugaufnahme oder andere Teile der Schrumpfvorrichtung aus der Gasleiteinheit herausragen bzw. in diese hereinragen können.

Die Gasabsaugvorrichtung, gegebenenfalls mit einer Gasleiteinheit, kann separat von der Heizeinrichtung angeordnet und unabhängig von der Heizanordnung bewegbar ausgeführt sein. In einer vorteilhaften Ausgestaltung jedoch umgreift die Heizeinrichtung die Werkzeugaufnahme ringförmig, und die Gasleiteinheit ist als eine Haube auf der Heizeinrichtung ausgestaltet. Die Heizeinrichtung kann somit als Stütze für die Gasleiteinheit dienen, die dadurch mit keiner eigenen Aufhängung oder bewegbaren Befestigung ausgestattet sein muss. Die Gasleiteinheit kann lose oder fest mit der Heizeinrichtung verbunden sein. Eine lose Gasleiteinheit kann separat von der Werkzeugaufnahme weg- und wieder hingeführt werden. Eine fest mit der Heizeinrichtung verbundene Gasleiteinheit kann die Aufhängung und gegebenenfalls die Bewegungsvorrichtung der Heizeinrichtung mitnutzen. Es kann eine stabile Anordnung der Gasleiteinheit ohne eine weitere und separate Aufhängung erreicht werden.

Eine Bauteilersparnis kann auch erreicht werden, indem die Heizeinrichtung einen Teil der Gasleiteinheit bildet. Die Gasleiteinheit ist hierbei während des Absaugvorgangs an der Heizeinrichtung angeordnet, wobei eine der Gasleiteinheit zugewandte Fläche der Heizeinrichtung zur Leitung des abzusaugenden Gases zu einer Gaseinlassöffnung dient.

In einer weiteren Ausführungsvariante der Erfindung weist die Gasabsaugvorrichtung eine Gaseinlassöffnung auf, die im Inneren der Werkzeugaufnahme angeordnet ist. Die in der Werkzeugaufnahme entstehenden Dämpfe werden auf diese Weise weiter in das Innere der Werkzeugaufnahme und zur Gaseinlassöffnung gesogen und werden daran gehindert, aus der Öffnung der Werkzeugaufnahme in die Umgebung auszutreten. Es kann bei einer solchen Ausgestaltung der Schrumpfvorrichtung auf eine Gasleiteinheit verzichtet werden, wodurch eine freiere Beweglichkeit der Heizeinrichtung erreicht werden kann. Außerdem kann das Werkzeug mitsamt Werkzeugaufnahme an einem zur Gasabsaugung vorbereiteten Ort abgestellt werden, an dem das Werkzeug beispielsweise übergangsweise gelagert oder gekühlt wird, wobei vom Schaft des erhitzten Werkzeugs entweichende Dämpfe weiterhin abgesaugt werden können.

Um bei in der Werkzeugaufnahme befindlichem Werkzeug einen Gasstrom in die Werkzeugaufnahme und zur Gaseinlassöffnung zu gewährleisten, ist es sinnvoll, Kanäle zur Luftzufuhr in der Werkzeugaufnahme auszugestalten. Solche Kanäle können beispielsweise in der dem Werkzeug zugewandten Innenfläche der Werkzeugaufnahme eingearbeitet sein. Es ist auch möglich, an anderer Stelle in der Werkzeugaufnahme Kanäle vorzusehen, durch die Gas von einem am Schaft des Werkzeugs liegenden Au-ßenbereich der Werkzeugaufnahme zur Gaseinlassöffnung gesaugt werden kann. Bei einer Schrumpfvorrichtung, bei der das Werkzeug erst in eine Schrumpfhülse und die Schrumpfhülse in ein Schrumpffutter eingeschrumpft wird, können die Kanäle innen, außen oder in der Schrumpfhülse angeordnet sein.

In einer besonders vorteilhaften Ausgestaltung der Erfindung weist die Heizeinrichtung Gaskanäle auf, die zur Durchströmung von Gas während des Betriebs der Gasabsaugvorrichtung vorgesehen sind. Die Heizeinrichtung kann durch das Gas gekühlt werden, wodurch die Lebensdauer der Heizeinrichtung verlängert wird. Zweckmäßigerweise wird die Heizeinrichtung mit Luft gekühlt. Während des Aufheizens der Werkzeugaufnahme durch die Heizeinrichtung wird die Heizeinrichtung durch die von der Werkzeugaufnahme abgestrahlte Wärme miterhitzt. Dies führt zu einer erhöhten Beanspruchung der Heizeinrichtung. Zur Abführung des mit Flüssigkeitsdämpfen vermischten Gases aus der näheren Umgebung der Werkzeugaufnahme ist es notwendig, Luft oder Gas aus der weiteren Umgebung der Werkzeugaufnahme heranzuführen, um mit dem solcherart bewirkten Luftstrom das abzuführende Gas abzutransportieren. Der Luftstrom aus der weiteren Umgebung des Werkzeugfutters kann zur Kühlung der Heizeinrichtung genutzt werden. Durch die Führung der kühlen Luft durch Gaskanäle der Heizeinrichtung kann eine solche Kühlung auf effektive Weise erreicht werden. Der Strom der kühlen Luft wird zuerst durch die Heizeinrichtung und dann zu den entwichenen und zum Abtransport vorgesehenen Gasen geführt.

Zweckmäßigerweise sind die Gaskanäle durch eine Gasleitung mit dem Unterdruckbereich verbunden. Die durch die Heizeinrichtung zu leitende Luft kann auf diese Weise möglichst effektiv durch die Heizeinrichtung geführt werden und wird durch die Gasleitung in den Bereich geführt, in dem es die Flüssigkeitsdämpfe zu einer Gaseinlassöffnung hin transportiert. Die Gestaltung der Gaskanäle ist somit unabhängig von dem Ort des Entstehens der Flüssigkeitsdämpfe.

In einer alternativen Ausgestaltung der Erfindung münden die Gaskanäle in den Unterdruckbereich. Die Luft wird somit durch die Gaskanäle in unmittelbare Nähe zum Entstehungsort der Dämpfe geführt und kann sie anschließend abtransportieren.

Ein weiterer Vorteil wird erreicht, wenn das Werkzeugfutter eine an einem Ende der Werkzeugaufnahme angeordnete obere Endfläche aufweist und die Gasleiteinheit die Werkzeugaufnahme oberhalb der Endfläche vollständig umschließt. Erwärmte und nach oben aufsteigende Dämpfe können nicht nach oben hin aus der Gasleiteinheit entweichen und im Wesentlichen vollständig abgeführt werden, beispielsweise durch die Gaseinlassöffnung. Die Gaseinlassöffnung kann zu diesem Zweck oberhalb der Endfläche angeordnet sein, wobei auch hierbei das vollständige Umschließen als erfüllt angesehen wird.

Bei einer Erwärmung der Werkzeugaufnahme werden die meisten Gase üblicherweise aus der Aufnahmeöffnung aufsteigen. Durch ein Abschirmelement zur Auflage auf eine an einem Ende der Werkzeugaufnahme angeordnete obere Endfläche, wobei das Abschirmelement einen Gasleitkanal zur Leitung von Gas aus der Werkzeugaufnahmeöffnung heraus aufweist, können diese Gase gezielt gelenkt werden, beispielsweise zu einem Unterdruckbereich und/oder zu einer Gaseinlassöffnung hin.

Eine Mehrfachnutzung des Abschirmelements kann erreicht werden, wenn das Abschirmelement zur Abschirmung eines in die Werkzeugaufnahme eingesetzten Werkzeugs gegen ein von der Heizeinrichtung erzeugtes Magnetfeld vorgesehen ist. Auf ein zusätzliches Magnetfeldabschirmelement, das einer Erwärmung des in der Aufnahmeöffnung angeordneten Werkzeugs entgegenwirkt, kann verzichtet werden.

Eine sichere Positionierung der Heizeinrichtung um die Werkzeugaufnahme kann erreicht werden, wenn das Abschirmelement als Anschlagelement zur Positionierung der Heizeinrichtung vorgesehen ist. Das Abschirmelement ist zweckmäßigerweise mit der Heizeinrichtung fest verbunden.

Das Abschirmelement kann zu einem Umgreifen eines in der Aufnahmeöffnung angeordneten Werkzeugs vorgesehen sein. Ist jedoch, wie bei einem Einschrumpfprozess, kein Werkzeug in der Aufnahmeöffnung angeordnet, kann ein abschließendes Abschirmelement verwenden werden. Das Abschirmelement schließt die Aufnahmeöffnung hierbei in der Weise nach oben hin ab, dass aus der Werkzeugaufnahme aufsteigende Gase nur durch zumindest einen Gasleitkanal im Abschirmelement die Aufnahmeöffnung nach oben hin verlassen können. Einem unerwünschten Austritt von Dämpfen kann effektiv entgegengewirkt werden.

Die Erfindung geht außerdem aus von einem Verfahren zum Einschrumpfen eines Werkzeugs in eine Werkzeugaufnahme, bei dem die Werkzeugaufnahme durch eine Heizeinrichtung erwärmt wird. Es wird vorgeschlagen, dass Gase mit Hilfe einer Gasabsaugvorrichtung aus der Werkzeugaufnahme abgesaugt werden. Einem unerwünschten Verbreiten von aus oder an der Werkzeugaufnahme aufsteigenden Gasen kann effektiv entgegengewirkt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Darstellung eines Werkzeug- einstell- und Messgeräts mit einer Schrumpf- vorrichtung,
- Fig. 2: einen Schnitt durch eine Schrumpfvorrichtung mit einer Gasabsaugvorrichtung in schemati- scher Darstellung,
- Fig. 3: eine zur Fig. 2 alternative Ausführung einer Heizeinrichtung und Gasleiteinheit,
- Fig. 4: eine weitere Ausführung einer Gasabsaugvor- richtung mit einem Abschirmelement,
- Fig. 5: eine weitere Schnittdarstellung der Gasab- saugvorrichtung aus Fig. 4,
- Fig. 6: eine Draufsicht auf das Abschirmelement aus Fig. 5 und
- Fig. 7: eine Schnittdarstellung eines weiteren Ab- schirmelements auf einer Werkzeugaufnahme.

### Beschreibung der Ausführungsbeispiele

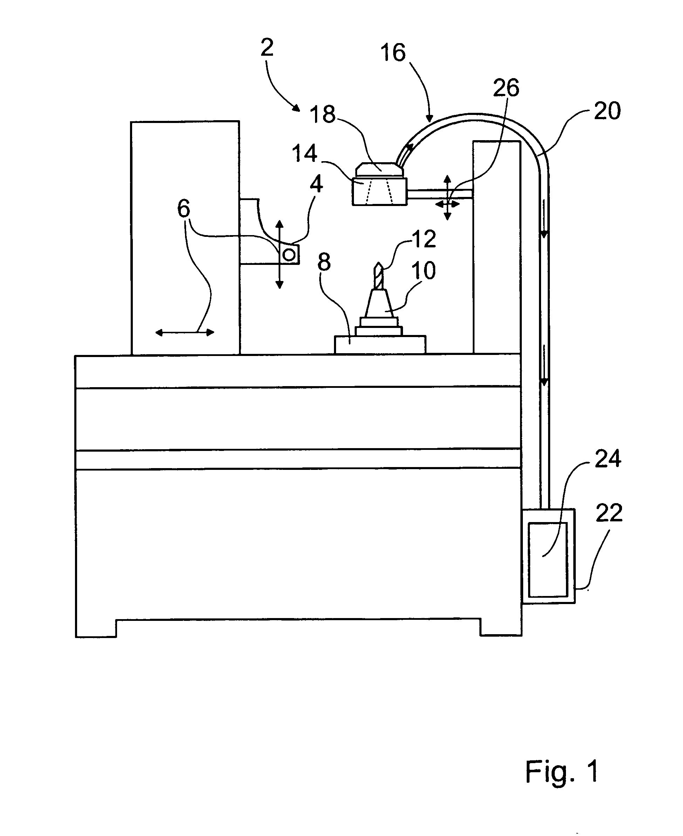

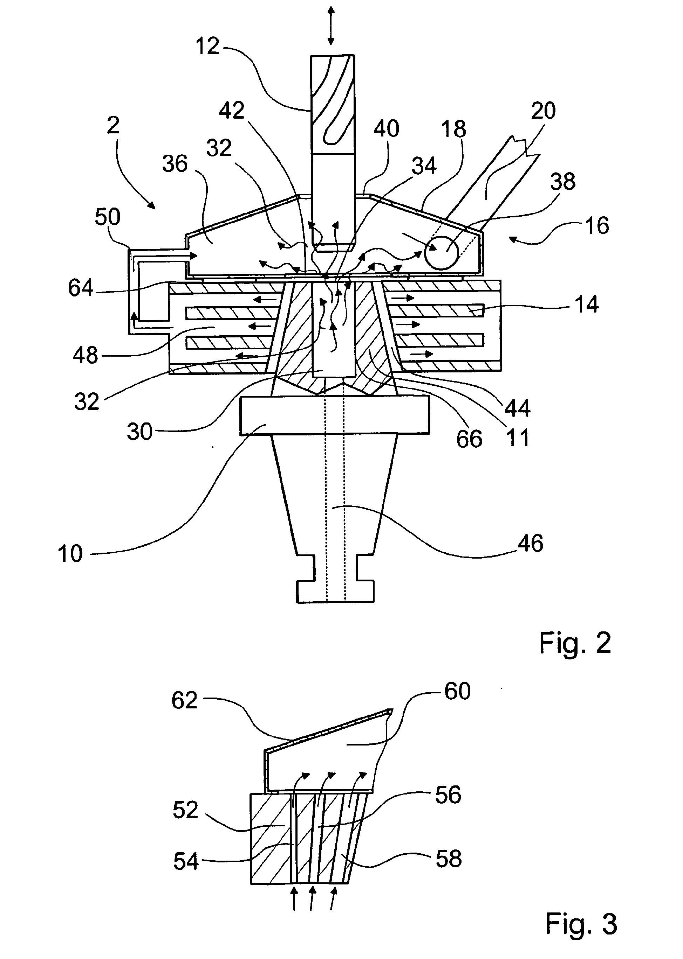

Figur 1 zeigt eine als Werkzeugeinstell- und Messgerät ausgebildete Einrichtung mit einer Schrumpfvorrichtung 2. Die Einrichtung weist eine Messvorrichtung 4 zum optischen Vermessen von Werkzeugparametern auf. Die Messvorrichtung 4 ist in die durch die Pfeile 6 angezeigten Richtungen verfahrbar. Die Einrichtung umfasst außerdem eine drehbare Werkzeugfutteraufnahme 8 zur Aufnahme eines als Schrumpffutter ausgestalteten Werkzeugfutters 10 mit einer Werkzeugaufnahme 11 (Figur 2). In die Werkzeugaufnahme 11 wird ein Werkzeug 12 mit der Schrumpfvorrichtung 2 eingeschrumpft, indem eine Heizeinrichtung 14 um die Werkzeugaufnahme 11 angeordnet wird und die Werkzeugaufnahme 11 erhitzt. Die Heizeinrichtung 14 ist hierfür entsprechend der durch die Pfeile 26 dargestellten Richtungen verfahrbar. Die Heizeinrichtung 14 arbeitet mit dem Prinzip der Wirbelströme und umfasst hierzu eine Induktionsspule. Mit der Heizeinrichtung 14 ist eine Gasabsaugvorrichtung 16 verbunden, die eine Gasleiteinheit 18 und eine damit verbundene Gasleitung 20 umfasst. Die Gasleitung 20 mündet in eine Gebläseeinheit 22 der Gasabsaugvorrichtung 16, in die eine Reinigungseinrichtung 24 zum Reinigen der sie durchströmenden Gase integriert ist.

In Figur 2 sind Teile der Schrumpfvorrichtung 2 in vergrößerter Form schematisch dargestellt. In die Werkzeugaufnahme 11 ist eine Bohrung 30 eingebracht, die zur Aufnahme des Werkzeugs 12 vorgesehen ist. Zum Einschrumpfen des Werkzeugs 12 in die Werkzeugaufnahme 11 wird die ringförmig ausgeführte Heizeinrichtung 14 um die Werkzeugaufnahme 11 angeordnet. Durch einen Induktionsstrom wird das metallische Material der Werkzeugaufnahme 11 um die Bohrung 30 herum erwärmt. Das Werkzeug 12 ist oberhalb der Bohrung 30 in einer Warteposition positioniert. Mit steigender Temperatur des metallischen Materials verdampfen immer mehr Rückstände aus Ölen als Gase 32, die von einem vorher in dem Schrumpffutter eingeschrumpften Werkzeug in der Bohrung 30 oder an der Werkzeugaufnahme 11 zurückgeblieben sind. Insbesondere beim Ausschrumpfen des Werkzeugs 12, werden eventuell noch feuchte Rückstände aus einem eben beendeten Bearbeitungsprozess, die an dem oder in dem Werkzeug 12 bzw. der Werkzeugaufnahme 11 haften, erhitzt. Sie verdampfen und entweichen vom Werkzeug 12, von der Werkzeugaufnahme 11 oder, bei wie in Figur 2 gezeigtem, bereits aus der Bohrung 30 angehobenem Werkzeug 12, aus der Bohrung 30.

Die Gase 32 gelangen in einen Unterdruckbereich 36 um die Öffnung 34 der Werkzeugaufnahme 11 herum und würden sich ohne die Gasabsaugvorrichtung 16 in die weitere Umgebung verteilen. Diese weitere Verteilung wird durch die Gasleiteinheit 18 verhindert, die den Unterdruckbereich 36 zur Aufrechterhaltung eines Unterdrucks nach außen hin abschirmt. Durch die Gebläseeinheit 22, die Gasleitung 20 und eine Gaseinlassöffnung 38 wird Gas aus dem von der Gasleiteinheit 18 abgeschirmten Unterdruckbereich 36 abgesaugt, so dass in diesem Bereich ein Unterdruck gegenüber dem Außenbereich der Gasleiteinheit 18 entsteht. Dieser Unterdruck wird durch die Gasleiteinheit 18 aufrechterhalten.

Das durch die Gaseinlassöffnung 38 abgesaugte Gas wird aus verschiedenen Öffnungen der Gasleiteinheit 18 angesogen. Eine erste Öffnung 40 in der Gasleiteinheit 18 dient zum Durchlassen des Werkzeugs 12 von oben in die Bohrung 30 der Werkzeugaufnahme 11. Die erste Öffnung 40 ist so ausgestaltet, dass auch bei eingeführtem Werkzeug 12 Gas - üblicherweise Umgebungsluft - durch die Öffnung 40 in den Unterdruckbereich 36 strömen kann. Auf der Unterseite der Gasleiteinheit 18 ist eine zweite Öffnung 42 eingebracht, die größer ist als die erste Öffnung 40. Wie die erste Öffnung 40 dient auch die zweite Öffnung 42 zum Durchlassen des Werkzeugs 12 in die Bohrung 30 und zum Zuführen von Luft in den Unterdruckbereich 36.

Die durch die zweite Öffnung 42 einströmende Luft kann durch einen oder mehrere Schlitze 44 zwischen der Werkzeugaufnahme 11 und der Heizeinrichtung 14 von außerhalb in den Unterdruckbereich 36 einströmen. Es ist auch möglich, dass die Werkzeugaufnahme 11 eine innere Bohrung 46 aufweist, in der eine in den Figuren nicht näher gezeigte Positioniervorrichtung angeordnet sein kann. Von der Bohrung 46 kann eingesaugte Luft in die Bohrung 30 gelangen, um von dort weiter durch die Öffnung 34 und die zweite Öffnung 42 in den Unterdruckbereich 36 einzuströmen. Durch die beschriebenen Gas- bzw. Luftströme wird der am Werkzeug 12 oder der Werkzeugaufnahme 11 entstehende Flüssigkeitsdampf, gelenkt durch die Gasleiteinheit 18, zur Gaseinlassöffnung 38 der Gasabsaugvorrichtung 16 geführt. Die Dämpfe treten nicht in die Umgebung der Gasabsaugvorrichtung 16 aus.

Ein weiterer Luftstrom wird direkt durch die Heizeinrichtung 14 geführt. Hierzu weist die Heizeinrichtung 14 Gaskanäle 48 auf, durch die Luft von einem der Schlitze 44 durch die Heizeinrichtung 14 und weiter zu einer Gasleitung 50 strömen kann. Die Gasleitung 50 mündet in den Unterdruckbereich 36, von wo der Luftstrom, die Rückstandsdämpfe mitnehmend, zur Gaseinlassöffnung 38 gesaugt wird. Der durch die Heizeinrichtung 14 gelenkte Luftstrom bewirkt eine Kühlung der Heizeinrichtung, die durch die Wärmeabstrahlung der Werkzeugaufnahme 11 erhitzt wird. Durch diese Kühlung kann die Lebensdauer der Heizeinrichtung 14 verlängert werden. Die in Figur 2 geschnitten gezeichneten und als Bohrungen ausgeführten Gaskanäle 48 verlaufen innerhalb der Heizeinrichtung so, dass an die Stelle, die der Werkzeugaufnahme 11 zugewandt ist und die von dieser am meisten erhitzt wird, die kühle Luft in die Heizeinrichtung 14 einströmt. Hierdurch wird diese am meisten erhitzte Stelle am meisten gekühlt.

Eine alternative Ausgestaltung einer Heizeinrichtung 52 und einer Gasleiteinheit 62 ist in Figur 3 gezeigt. In die Heizeinrichtung 52, die im Wesentlichen aus einer Induktionsspule besteht, sind Gaskanäle 54, 56, 58 eingebracht, von denen drei in Figur 3 gezeigt sind. Durch die Gaskanäle 54, 56, 58 kann Luft von unterhalb der Heizeinrichtung 52 durch die Heizeinrichtung 52 hindurch direkt in den Unterdruckbereich 60 der Gasleiteinheit 62 strömen. Die Gaskanäle 54, 56, 58 münden direkt in den Unterdruckbereich 60. Im Gegensatz zur Gasleiteinheit 18 aus Figur 2 ist die Gasleiteinheit 62 aus Figur 3 nach unten zur Heizeinrichtung 52 hin im Wesentlichen offen, so dass Luft aus den Gaskanälen 54, 56, 58 ungestört in den Unterdruckbereich 60 einströmen kann. Die Gaskanäle 54, 56, 58 sind so ausgeführt, dass in dem Bereich, in dem die größte Hitzebildung ist, der breiteste Gaskanal 58 angelegt ist. Etwas weiter entfernt von der nicht gezeigten Hitze abstrahlenden Werkzeugaufnahme ist ein zweiter Gaskanal 56 gelegen, der von seinem Querschnitt etwas kleiner ausgelegt ist als der Gaskanal 58. Noch weiter außerhalb gelegen ist der Gaskanal 54 mit dem kleinsten Strömungsquerschnitt. Die Form und die Wegführung der Gaskanäle 54, 56, 58 und 48 können in einer von einem Fachmann als geeignet angesehenen Weise ausgestaltet sein.

Die in den Figuren 2 und 3 gezeigten Gasleiteinheiten 18 und 62 sind jeweils als Haube auf der Heizeinrichtung 14 bzw. 52 ausgestaltet. Die Gasleiteinheit 18 ist mittels kleiner Ständer 64 an der Heizeinrichtung 14 befestigt. Die Gasleiteinheit 18 wird somit von der Heizeinrichtung 14 getragen, so dass sie keiner separaten Aufhängung bedarf. Die Gasleiteinheit 62 ist auf der Heizeinrichtung 52 aufliegend ausgestaltet, wobei es auch möglich ist, die Gasleiteinheit 62 auf der Heizeinrichtung 52 direkt zu befestigen. Die Gasleiteinheit 62 ist nach unten hin offen, wobei eine Fläche der Heizeinrichtung 52 einen Teil der Gasleiteinheit 62 bildet. Die Gasleiteinheit 62 weist eine in Figur 3 nicht gezeigte Aufhängung auf, durch die die Gasleiteinheit 62 getrennt von der Heizeinrichtung 52 zu einer Werkzeugaufnahme oder einem Werkzeug hin oder von diesem weg verfahrbar ist.

In einer alternativen Ausgestaltungsform der Erfindung ist es auch möglich, die Gebläseeinheit 22 mit der Bohrung 46 in der Werkzeugaufnahme 11 zu verbinden und Gase aus der Bohrung 30 der Werkzeugaufnahme 11 direkt nach unten abzusaugen. In der Bohrung 30 entstehende Rückstandsdämpfe können auf diese Weise gar nicht erst aus der Bohrung 30 austreten. Außerdem kann eine Gasabsaugung auch dann fortgesetzt werden, wenn die Heizeinrichtung 14 von der Werkzeugaufnahme 11 weg verfahren wird. Um eine Gasabsaugung auch bei eingeschrumpften Werkzeug 12 zu ermöglichen, können in die Oberfläche 66 der Bohrung 30 eingearbeitete Kanäle vorgesehen sein, in denen Gas bzw. Luft von oberhalb der Werkzeugaufnahme 11 in die Bohrung 46 einströmen kann. Hierdurch kann eine effektive Gasabsaugung auch bei eingeschrumpftem Werkzeug erreicht werden.

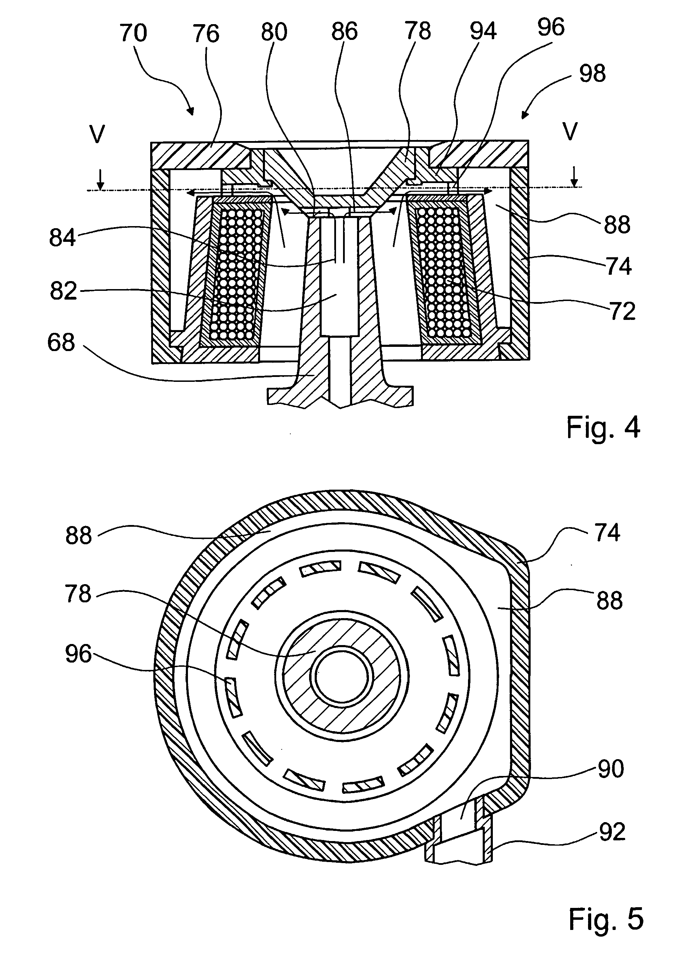

Figur 4 zeigt eine weitere, um eine Werkzeugaufnahme 68 herum angeordnete Schrumpfvorrichtung 70 mit einer als Induktor ausgestalteten Heizeinrichtung 72. Die Heizeinrichtung 72 wird gehalten von einem Gehäuse 74 der Schrumpfvorrichtung 70, das wiederum einen klappbaren Deckel 76 aufweist. Der Deckel 76 stützt sich im verriegelten Zustand an einem in einer Öffnung des Deckels 76 angeordneten Abschirmelement 78 ab, das auf einer an einem Ende der Werkzeugaufnahme 68 angeordneten oberen Endfläche 80 der Werkzeugaufnahme 68 aufliegt. Beim Heruntersenken der Schrumpfvorrichtung 70 um die Werkzeugaufnahme 68 dient das Abschirmelement 78 als Anschlag zur Positionierung der Heizeinrichtung 72 in eine zur Erwärmung der Werkzeugaufnahme 68 geeignete Position.

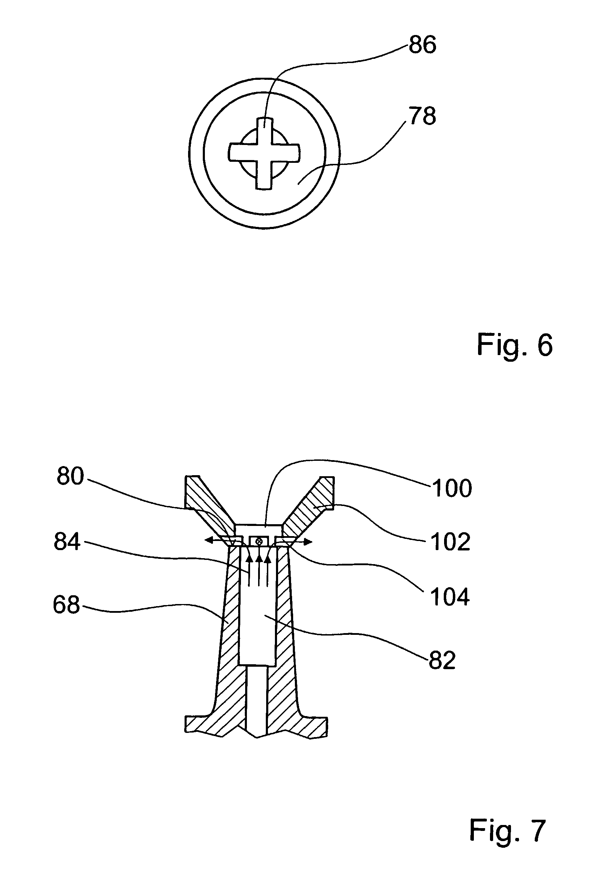

Zum Absaugen von in der Aufnahmeöffnung 82 der Werkzeugaufnahme 68 aufsteigenden Gasen 84 sind in die Unterseite des Abschirmelements 78 zwei Gasleitkanäle 86 kreuzförmig eingebracht. In Figur 6 sind diese Gasleitkanäle 86 in einer Sicht von unten auf das Abschirmelement 78 gezeigt. Durch die Gasleitkanäle 86 werden die Gase 84 in einen Unterdruckbereich 88 gelenkt, der durch eine Gaseinlassöffnung 90 mit einer Gasleitung 92 verbunden ist (Figur 5). Durch die Gasleitung 92 werden Gase 84 aus dem Unterdruckbereich 88 abgesaugt und einer beispielsweise wie in Figur 1 dargestellten Gebläseeinheit 22 zugeführt. Die durch die Gasleitkanäle 86 strömenden Gase 84 werden unterhalb eines Stützelements 94 und zwischen Stegen 96 hindurch in den Unterdruckbereich 88 gesaugt. Die Stege 96 sind einstückig mit dem Stützelement 94 verbunden, das wiederum fest mit dem Abschirmelement 78 verbunden ist.

Durch die das Gehäuse 74, den Deckel 76 und das Abschirmelement 78 umfassende Gasleiteinheit 98, die die Werkzeugaufnahme 68 oberhalb der Endfläche 80 bis auf die Gaseinlassöffnung 90 vollständig umschließt, können aus der Aufnahmeöffnung 82 nach oben aufsteigende Gase 84 nicht aus der Gasleiteinheit 98 heraus und in die Umgebung dringen. Außen an der Werkzeugaufnahme 68 aufsteigende Verdampfungsgase werden ebenfalls unterhalb des Stützelements 94 und zwischen den Stegen 96 hindurch in den Unterdruckbereich 88 gesaugt. Das geschlossene Abschirmelement 78, das die Aufnahmeöffnung 82 nach oben hin - bis auf die Gasleitkanäle 86 - verschließt, ist vor allem für einen Einschrumpfvorgang geeignet, bei dem während des Erwärmens der Werkzeugaufnahme 68 kein Werkzeug 12 in der Aufnahmeöffnung 82 angeordnet ist.

Ein mit einer Durchtrittsöffnung 100 versehenes Abschirmelement 102 ist in Figur 7 in einer Schnittdarstellung gezeigt. Es liegt ebenfalls auf der Endfläche 80 der Werkzeugaufnahme 68 auf und umfasst an seiner Unterseite kreuzweise angeordnete Gasleitkanäle 104 zur Führung von aus der Aufnahmeöffnung 82 aufsteigenden Gasen 84 zu einem wie in Figur 4 dargestellten, von einer Gasleiteinheit 98 umgriffenen Unterdruckbereich 88. Das Abschirmelement 102 wird vor allem zum Ausschrumpfen eines Werkzeugs 12 aus der Werkzeugaufnahme 68 verwendet und dient zur Abschirmung eines in der Aufnahmeöffnung 82 eingesetzten Werkzeugs 12 gegen ein von der Heizeinrichtung 72 erzeugtes Magnetfeld, damit sich das Werkzeug 12 nicht zu schnell erwärmt und ausdehnt. Durch den zum Unterdruckbereich 88 ziehenden Sog werden Gase 84 am Durchtritt von der Aufnahmeöffnung 82 nach oben durch die Durchtrittsöffnung 100 gehindert, so dass die Umgebung auch durch das Abschirmelement 102 von den Gasen 84 abgeschirmt wird.

### Bezugszeichen

- 2: Schrumpfvorrichtung
- 4: Messvorrichtung
- 6: Pfeil
- 8: Werkzeugfutteraufnahme
- 10: Werkzeugfutter
- 11: Werkzeugaufnahme
- 12: Werkzeug
- 14: Heizeinrichtung
- 16: Gasabsaugvorrichtung
- 18: Gasleiteinheit
- 20: Gasleitung
- 22: Gebläseeinheit
- 24: Reinigungseinrichtung
- 26: Pfeil
- 30: Bohrung
- 32: Gas
- 34: Öffnung
- 36: Unterdruckbereich
- 38: Gaseinlassöffnung
- 40: Erste Öffnung
- 42: Zweite Öffnung
- 44: Schlitz
- 46: Bohrung
- 48: Gaskanal
- 50: Gasleitung

- 52: Heizeinrichtung
- 54: Gaskanal
- 56: Gaskanal
- 58: Gaskanal
- 60: Unterdruckbereich
- 62: Gasleiteinheit
- 64: Ständer
- 66: Oberfläche
- 68: Werkzeugaufnahme
- 70: Schrumpfvorrichtung
- 72: Heizeinrichtung
- 74: Gehäuse
- 76: Deckel
- 78: Abschirmelement
- 80: Endfläche
- 82: Aufnahmeöffnung
- 84: Gas
- 86: Gasleitkanal
- 88: Unterdruckbereich
- 90: Gaseinlassöffnung
- 92: Gasleitung
- 94: Stützelement
- 96: Steg
- 98: Gasleiteinheit
- 100: Durchtrittsöffnung
- 102: Abschirmelement
- 104: Gasleitkanal

## Patentansprüche

1. Schrumpfvorrichtung (2, 70) zum Einschrumpfen eines Werkzeugs (12) in eine Werkzeugaufnahme (11, 68) eines Werkzeugfutters (10) mit einer Heizeinrichtung (14, 52, 72) zum Aufheizen der Werkzeugaufnahme (11, 68) und einer Messvorrichtung (4) zum optischen Vermessen von Werkzeugparametern, **gekennzeichnet durch** eine Gasabsaugvorrichtung (16) zum Absaugen von aus der Werkzeugaufnahme (11, 68) entweichenden Gasen (32, 84).

2. Schrumpfvorrichtung (2, 70) nach Anspruch 1, **gekennzeichnet durch** eine Gasleiteinheit (18, 62, 98) zur Leitung von Gas (32, 84) von einer Aufnahmeöffnung (34) der Werkzeugaufnahme (11, 68) zu einer Gaseinlassöffnung (38, 90) der Gasabsaugvorrichtung (16).

3. Schrumpfvorrichtung (2, 70) nach Anspruch 1 oder 2, **gekennzeichnet durch** eine Gasleiteinheit (18, 62, 98), die einen Unterdruckbereich (36, 88) umgreift, wobei die Gasleiteinheit (18, 62, 98) zur Aufrechterhaltung eines Unterdrucks im Unterdruckbereich (36, 88) relativ zu einem Außenbereich der Gasleiteinheit (18, 62, 98) und eines Druckgefälles vom einer Aufnahmeöffnung (34, 82) der Werkzeugaufnahme (11, 68) zum Unterdruckbereich (36, 88) vorgesehen ist.

4. Schrumpfvorrichtung (2) nach Anspruch 2 oder 3, **dadurch gekennzeichnet dass** die Heizeinrichtung (14, 52) die Werkzeugaufnahme (11) ringförmig umgreift und die Gasleiteinheit (18, 62) als eine Haube auf der Heizeinrichtung (14, 52) ausgestaltet ist.

5. Schrumpfvorrichtung (2, 70) nach einem der Ansprüche 2 bis 4, **dadurch gekennzeichnet dass** die Heizeinrichtung (14, 52, 72) einen Teil der Gasleiteinheit (18, 62, 98) bildet.

6. Schrumpfvorrichtung (2) nach einem der Ansprüche 2 bis 5, **dadurch gekennzeichnet dass** die Heizeinrichtung (14, 52) Gaskanäle (48, 54, 56, 58) aufweist, die zur Durchströmung von Gas (32) während des Betriebs der Gasabsaugvorrichtung (16) vorgesehen sind.

7. Schrumpfvorrichtung (2) nach Anspruch 3 und 6, **dadurch gekennzeichnet dass** die Gaskanäle (48) durch eine Gasleitung (50) mit dem Unterdruckbereich (36) verbunden sind.

8. Schrumpfvorrichtung (2) nach Anspruch 3 und 6, **dadurch gekennzeichnet dass** die Gaskanäle (54, 56, 58) in den Unterdruckbereich (36) münden.

9. Schrumpfvorrichtung (2, 70) Schrumpfvorrichtung (2) nach einem der Ansprüche 2 bis 8, **dadurch gekennzeichnet, dass** das Werkzeugfutter (10) eine an einem Ende der Werkzeugaufnahme (68) angeordnete obere Endfläche (80) aufweist und die Gasleiteinheit (18, 62, 98) die Werkzeugaufnahme (68) oberhalb der Endfläche (80) vollständig umschließt.

10. Schrumpfvorrichtung (70) nach einem der vorhergehenden Ansprüche, **gekennzeichnet durch** ein Abschirmelement (78, 102) zur Auflage auf eine an einem Ende der Werkzeugaufnahme (68) angeordnete obere Endfläche (80), wobei das Abschirmelement (78, 102) einen Gasleitkanal (86, 104) zur Leitung von Gas (64) aus der Aufnahmeöffnung (82) heraus aufweist.

11. Schrumpfvorrichtung (70) nach Anspruch 10, **dadurch gekennzeichnet, dass** das Abschirmelement (78, 102) zur Abschirmung eines in die Werkzeugaufnahme (68) eingesetzten Werkzeugs (12) gegen ein von der Heizeinrichtung (72) erzeugtes Magnetfeld vorgesehen ist.

12. Schrumpfvorrichtung (70) nach Anspruch 10 oder 11, **dadurch gekennzeichnet, dass** das Abschirmelement (78, 102) als Anschlagelement zur Positionierung der Heizeinrichtung (72) vorgesehen ist.

13. Schrumpfvorrichtung (70) nach einem der Ansprüche 10 bis 12, **dadurch gekennzeichnet, dass** das Abschirmelement (78) die Aufnahmeöffnung (82) in der Weise nach oben hin abschließt, dass aus der Aufnahmeöffnung (82) aufsteigende Gase (84) nur durch zumindest einen Gasleitkanal (86) im Abschirmelement (78) die Aufnahmeöffnung (82) nach oben hin verlassen können.

14. Verfahren zum Einschrumpfen eines Werkzeugs (12) in eine Werkzeugaufnahme (11, 68) eines Werkzeugfutters (10), bei dem die Werkzeugaufnahme (11, 68) durch eine Heizeinrichtung (14, 52, 72) erwärmt wird und die Werkzeugparameter durch eine Messvorrichtung (4) optisch vermessen werden,
**dadurch gekennzeichnet dass** Gase (32, 84) mit Hilfe einer Gasabsaugvorrichtung (16) aus der Werkzeugaufnahme (11, 68) abgesaugt werden.

## Claims

1. Shrinking device (2, 70) for shrinking a tool (12) into a tool holder (11, 68) of a tool chuck (10), having a heating device (14, 52, 72) for heating the tool holder (11, 68) and a measuring device (4) for optically measuring tool parameters, **characterized by** a gas suction device (16) for evacuating gases (32, 84) escaping from the tool holder (11, 68).

2. Shrinking device (2, 70) according to Claim 1, **characterized by** a gas-conducting unit (18, 62, 98) for conducting gas (32, 84) from a holder opening (34) of the tool holder (11, 68) to a gas inlet opening (38, 90) of the gas suction device (16).

3. Shrinking device (2, 70) according to Claim 1 or 2, **characterized by** a gas-conducting unit (18, 62, 98) which encompasses a negative pressure region (36, 88), the gas-conducting unit (18, 62, 98) being provided for maintaining a negative pressure in the negative pressure region (36, 88) relative to an external region of the gas-conducting unit (18, 62, 98) and a pressure drop from a holder opening (34, 82) of the tool holder (11, 68) to the negative pressure region (36, 88).

4. Shrinking device (2) according to Claim 2 or 3, **characterized in that** the heating device (14, 52) annularly encompasses the tool holder (11) and the gas-conducting unit (18, 62) is designed as a hood on the heating device (14, 52).

5. Shrinking device (2, 70) according to one of Claims 2 to 4, **characterized in that** the heating device (14, 52, 72) forms part of the gas-conducting unit (18, 62, 98).

6. Shrinking device (2) according to one of Claims 2 to 5, **characterized in that** the heating device (14, 52) has gas ducts (48, 54, 56, 58) which are provided for gas (32) to flow through during the operation of the gas suction device (16).

7. Shrinking device (2) according to Claims 3 and 6, **characterized in that** the gas ducts (48) are connected to the negative pressure region (36) by a gas line (50).

8. Shrinking device (2) according to Claims 3 and 6, **characterized in that** the gas ducts (54, 56, 58) open into the negative pressure region (36).

9. Shrinking device (2, 70) shrinking device (2) according to one of Claims 2 to 8, **characterized in that** the tool chuck (10) has an upper end surface (80) arranged at one end of the tool holder (68) and the gas-conducting unit (18, 62, 98) completely surrounds the tool holder (68) above the end surface (80).

10. Shrinking device (70) according to one of the preceding claims, **characterized by** a shielding element (78, 102) for resting on an upper end surface (80) arranged at one end of the tool holder (68), the shielding element (78, 102) having a gas-conducting duct (86, 104) for conducting gas (64) out of the holder opening (82).

11. Shrinking device (70) according to Claim 10, **characterized in that** the shielding element (78, 102) is provided for shielding a tool (12), which is inserted into the tool holder (68), from a magnetic field generated by the heating device (72).

12. Shrinking device (70) according to Claim 10 or 11, **characterized in that** the shielding element (78, 102) is provided as a stop element for positioning the heating device (72).

13. Shrinking device (70) according to one of Claims 10 to 12, **characterized in that** the shielding element (78) upwardly closes off the holder opening (82) in such a manner that gases (84) rising out of the holder opening (82) can only leave the holder opening (82) upward through at least one gas-conducting duct (86) in the shielding element (78).

14. Method for shrinking a tool (12) into a tool holder (11, 68) of a tool chuck (10), in which the tool holder (11, 68) is heated by a heating device (14, 52, 72) and the tool parameters are optically measured by a measuring device (4), **characterized in that** gases (32, 84) are evacuated from the tool holder (11, 68) with the aid of a gas suction device (16).

## Revendications

1. Dispositif de serrage (2, 70) pour le serrage d'un outil (12) dans un porte-outil (11, 68) d'un mandrin de serrage (10) avec un dispositif de chauffage (14, 52, 72) pour le chauffage du porte-outil (11, 68) et un dispositif de mesure (4) pour la mesure optique de paramètres de l'outil, **caractérisé par** un dispositif d'aspiration de gaz (16) pour aspirer les gaz (32, 84) s'échappant du porte-outil (11, 68).

2. Dispositif de serrage (2, 70) selon la revendication 1, **caractérisé par** une unité de conduite de gaz (18, 62, 98) pour la conduite de gaz (32, 84) d'une ouverture de réception (34) du porte-outil (11, 68) vers une ouverture d'entrée de gaz (38, 90) du dispositif d'aspiration de gaz (16).

3. Dispositif de serrage (2, 70) selon la revendication 1 ou 2, **caractérisé par** une unité de conduite de gaz (18, 62, 98), qui entoure une zone de dépression (36, 88), dans lequel l'unité de conduite de gaz (18, 62, 98) est prévue pour maintenir une dépression dans la zone de dépression (36, 88) par rapport à une zone extérieure de l'unité de conduite de gaz (18, 62, 98) et un gradient de pression depuis une ouverture de réception (34, 82) du porte-outil (11, 68) jusqu'à la zone de dépression (36, 88).

4. Dispositif de serrage (2) selon la revendication 2 ou 3, **caractérisé en ce que** le dispositif de chauffage (14, 52) entoure en forme d'anneau le porte-outil (11) et l'unité de conduite de gaz (18, 62) est réalisée sous la forme d'une hotte sur le dispositif de chauffage (14, 52).

5. Dispositif de serrage (2, 70) selon l'une quelconque des revendications 2 à 4, **caractérisé en ce que** le dispositif de chauffage (14, 52, 72) forme une partie de l'unité de conduite de gaz (18, 62, 98).

6. Dispositif de serrage (2) selon l'une quelconque des revendications 2 à 5, **caractérisé en ce que** le dispositif de chauffage (14, 52) présente des canaux de gaz (48, 54, 56, 58), qui sont prévus pour la circulation de gaz (32) pendant le fonctionnement du dispositif d'aspiration de gaz (16).

7. Dispositif de serrage (2) selon les revendications 3 et 6, **caractérisé en ce que** les canaux de gaz (48) sont raccordés à la zone de dépression (36) par une conduite de gaz (50).

8. Dispositif de serrage (2) selon les revendications 3 et 6, **caractérisé en ce que** les canaux de gaz (54, 56, 58) débouchent dans la zone de dépression (36).

9. Dispositif de serrage (2, 70) dispositif de serrage (2) selon l'une quelconque des revendications 2 à 8, **caractérisé en ce que** le mandrin de serrage (10) présente une face d'extrémité supérieure (80) disposée à une extrémité du porte-outil (68) et l'unité de conduite de gaz (18, 62, 98) entoure entièrement le porte-outil (68) au-dessus de la face d'extrémité (80).

10. Dispositif de serrage (70) selon l'une quelconque des revendications précédentes, **caractérisé par** un élément de protection (78, 102) à poser sur une face d'extrémité supérieure (80) disposée à une extrémité du porte-outil (68), dans lequel l'élément de protection (78, 102) présente un canal de conduite de gaz (86, 104) pour la conduite de gaz (64) hors de l'ouverture de réception (82).

11. Dispositif de serrage (70) selon la revendication 10, **caractérisé en ce que** l'élément de protection (78, 102) est prévu pour protéger un outil (12) introduit dans le porte-outil (68) contre un champ magnétique produit par le dispositif de chauffage (72).

12. Dispositif de serrage (70) selon la revendication 10 ou 11, **caractérisé en ce que** l'élément de protection (78, 102) est prévu comme élément de butée pour le positionnement du dispositif de chauffage (72).

13. Dispositif de serrage (70) selon l'une quelconque des revendications 10 à 12, **caractérisé en ce que** l'élément de protection (78) ferme l'ouverture de réception (82) vers le haut, de telle manière que des gaz (84) s'échappant par l'ouverture de réception (82) ne puissent quitter l'ouverture de réception (82) vers le haut que par au moins un canal de conduite de gaz (86) dans l'élément de protection (78).

14. Procédé de serrage d'un outil (12) dans un porte-outil (11, 68) d'un mandrin de serrage (10), dans lequel on chauffe le porte-outil (11, 68) au moyen d'un dispositif de chauffage (14, 52, 72) et on mesure optiquement les paramètres de l'outil au moyen d'un dispositif de mesure (4), **caractérisé en ce que** l'on aspire des gaz (32, 84) hors du porte-outil (11, 68) au moyen d'un dispositif d'aspiration de gaz (16).
